Europäisches Patentamt

European Patent Office

Office européen des brevets

(11) Publication number: **0 328 502**
**A2**

# (12) EUROPEAN PATENT APPLICATION

(21) Application number: 89850042.6

(22) Date of filing: 09.02.89

(51) Int..Cl.⁴: **D 21 C 1/02**
**F 16 C 13/00**

(30) Priority: **10.02.88 FI 880617**

(43) Date of publication of application:
**16.08.89 Bulletin 89/33**

(84) Designated Contracting States:
**AT DE FR GB IT SE**

(71) Applicant: **VALMET PAPER MACHINERY INC.**
**Punanotkonkatu 2**
**SF-00130 Helsinki (FI)**

(72) Inventor: **Niskanen, Juhani**
**Salviantie 2 J**
**SF-90460 Oulunsalo (FI)**

(74) Representative: **Rostovanyi, Peter et al**
**AWAPATENT AB Box 5117**
**S-200 71 Malmö (SE)**

(54) Method for equalizing the temperature profile of a variable-crown roll and a variable-crown roll intended for carrying out the method.

(57) The invention concerns a method for equalizing the temperature profile of a variable-crown roll and for lowering the operating temperature, which said roll (1) comprises a stationary roll axle (2), around which the roll mantle (3) is arranged as revolving. The deflection of the roll mantle (3) is adjusted by means of hydraulic loading elements (10) supported on the roll axle (2) and acting upon the inner face (4) of the roll mantle in the direction of compression as well as by means of hydraulic counter-zone elements (20) acting in the opposite direction. It is an essential feature of the invention that, when the inner face (4) of the roll mantle is loaded by means of the counter-zone elements (20), the loading elements (10) proper placed facing said counter-zone elements (20) are pulled off in order that they should not act upon the inner face (4) of the roll mantle. The invention further concerns a variable-crown roll intended for carrying out the method.

FIG. 1

## Description

**Method for equalizing the temperature profile of a variable-crown roll and a variable-crown roll intended for carrying out the method**

The present invention concerns a method for equalizing the temperature profile of a variable-crown roll and for lowering its operating temperature, which said roll comprises a stationary roll axle, around which the roll mantle is arranged as revolving, the deflection of said mantle being adjusted by means of hydraulic loading elements supported on the roll axle and acting upon the inner face of the roll mantle in the direction of compression as well as by means of hydraulic counter-zone elements acting in the opposite direction.

The invention also concerns a variable-crown roll intended for carrying out the method in accordance with the invention, which said roll comprises a stationary roll axle, around which the roll mantle is arranged revolving, hydraulic glide-shoe arrangements that act upon the inner face of the roll mantle and that are supported on the roll axle being arranged between said roll mantle and the roll axle, which said glide-shoe arrangements comprise loading elements proper acting in the direction of compression of the nip as well as counter-zone elements acting in the opposite direction. The roll may be such that its roll mantle is journalled at its ends on the roll axle, or the roll may be a so-called mobile-mantle roll, i.e. a roll in which the roll mantle can move relative the roll axle also at its ends.

In prior art, a number of different variable-crown rolls for paper machines or for paper finishing equipment are known, for which different designations are used, such as variable-crown roll, roll adjustable in zones, and equivalent. As a rule, these rolls comprise a massive or tubular, stationary roll axle and a roll mantle arranged as revolving around said axle. Between said axle and the mantle, glide-shoe arrangements and/or a chamber or a series of chambers of pressure fluid are fitted which act upon the inner face of the mantle so that the axial profile of the mantle at the nip can be aligned or adjusted in the desired way.

When a roll adjustable in zones (e.g. a roll provided with hydraulic loading elements) is used with low linear loads, in some cases it becomes a problem that in some zones a negative pressure ought to be reached. As a rule, this has been solved by using counter-zones, i.e. counter-zone elements which act in the direction opposite to the direction of effect of the loading elements proper. The counter-zones are, however, associated with the problem that they cause uneven heating of the roll mantle, i.e. an uneven temperature profile. This comes from the fact that, in prior-art solutions, the loading elements proper were always loaded at the same time with the counter-zone elements. In a roll adjustable in zones and provided with loading elements, the principal suppliers of heat of the roll are exactly said loading elements and counter-zone elements.

The object of the present invention is to eliminate the problem described above and related to uneven heating and to provide such a method and such a variable-crown roll making use of the method by means of which a temperature profile is obtained for the roll which is substantially better than in the prior-art solutions.

In view of achieving the objective given above and those that will come out later, the method in accordance with the invention is mainly characterized in that, when the inner face of the roll mantle is loaded by means of the counter-zone elements, the loading elements proper placed facing said counter-zone elements are pulled off so that they should not act upon the inner face of the roll mantle.

On the other hand, the variable-crown roll in accordance with the invention is mainly characterized in that the counter-zone elements and the loading elements proper placed facing them are interconnected in such a way that, when the counter-zone elements are connected to operation, the loading elements proper connected to them are arranged to be connected out of operation.

The basic idea of the invention lies therein that, in a variable-crown roll provided with counter-zone elements, when a counter-zone is operated, the loading element(s) proper placed facing the counter zone is/are taken out of operation, i.e. the glide shoe of the loading element proper is pulled off contact with the inner face of the roll mantle. With the above procedure, by means of the solution in accordance with the invention, the advantage is obtained that the thermal load derived from the loading elements, the temperature profile of the roll, can be made uniform across the entire roll, because in the axial direction, at each point of the roll there is only one loading element (either a loading element proper or a counter-zone element) in contact with the inner face of the roll mantle. The other advantages and specific features of the invention come out from the detailed description of the invention to be given below.

In the following, the invention will be described in detail with reference to some preferred exemplifying embodiments of the invention shown in the figures in the accompanying drawing, the invention being by no means strictly confined to the details of said embodiments.

Figure 1 is a schematical axial vertical sectional view of a variable-crown roll provided with counter-zone elements as well as of the temperature profile of the roll.

Figure 2 is a schematical and partial vertical sectional view of a preferred embodiment of the roll in accordance with the invention at the level of a loading element which is placed facing a counter-zone element.

Figure 3 is likewise a schematical and partial vertical sectional view of an alternative embodiment of the roll in accordance with the invention.

Figure 4 is a corresponding view of a further alternative embodiment of a roll in accordance with the invention.

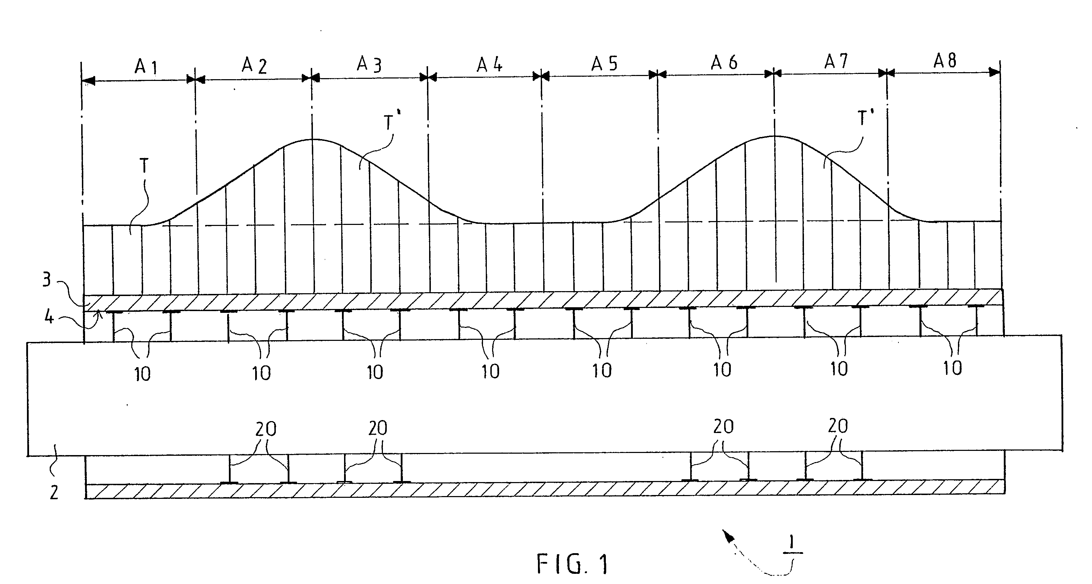

In Fig. 1, the variable-crown roll is denoted generally with the reference numeral 1. The variable-crown roll 1 comprises a massive central axle 2 and a roll mantle 3 arranged as revolving on said axle. Between the central axle 2 and the roll mantle 3, loading elements 10 acting upon the inner face 4 of the mantle as well as counter-zone elements 20 acting in the opposite direction in the nip plane are fitted. The end bearings of the roll and any other auxiliary equipment have been omitted in Fig. 1 for the sake of clarity of the illustration. In Fig. 1, the loading elements of the roll have been divided into eight zones A1...A8 in the axial direction, and the counter-zone elements are placed facing the second and third as well as the sixth and seventh zone (zones A2 and A3 as well as A6 and A7). In variable-crown rolls provided with counter-zones, such an arrangement can be considered most advantageous, for the need for counter-zones is highest at these places. However, if necessary, it is also possible to use counter-zones at other portions of the roll, or over the entire length of the roll mantle.

Moreover, in Fig. 1, the temperature profile T produced by the loading elements 10 and 20 in the roll is shown. As can be seen from the figure, the counter-zone elements produce remarkably high peak points T' in the temperature profile T if the counter-zone elements are used at the same time with the loading elements proper placed facing them. Thus, according to the basic idea of the invention, the loading elements proper placed facing the counter-zone elements are pulled out of contact with the inner face 4 of the roll mantle when the counter-zone elements are in operation. By means of this arrangement it is achieved that the temperature profile T of the roll 1 becomes even in the way shown in Fig. 1 by means of dashed lines below the temperature peaks T'.

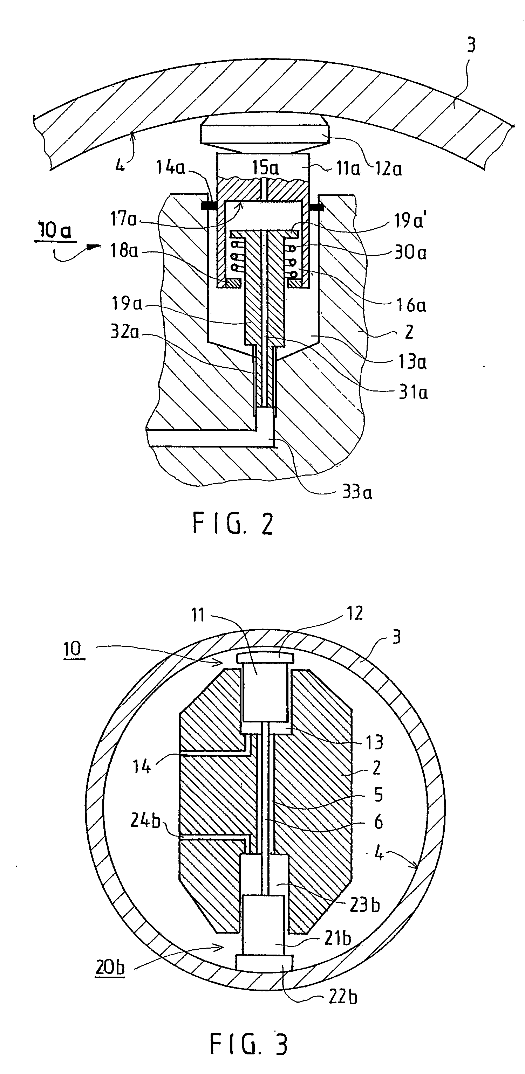

Fig. 2 shows an embodiment of a solution in accordance with the invention by means of which the desired effect is produced. Like in Fig. 1, in Fig. 2 the roll axle is also denoted with the reference numeral 2, the roll mantle with the reference numeral 3, and the inner face of the mantle with the reference numeral 4. One hydraulic loading element proper of the variable-crown roll is denoted generally with the reference denotation 10a, and said loading element 10a comprises a hydraulic piston 11a and a related glide shoe 12a, which is intended, by the intermediate of a fluid film, to reach contact with, and to rest against, the inner face 4 of the roll mantle. The hydraulic piston 11a is fitted as mobile in a cylinder bore 13a formed in the central axle 2 of the roll, in which said bore 13a the hydraulic piston 11a is sealed slidably by means of an annular seal 14a.

In the solution in accordance with the invention, a cavity space 16a has been formed in the end of the hydraulic piston 11a that is placed facing the bottom of the cylinder bore 13a, in which said cavity space 16a a counter piece 19a provided with a flange is fitted. A flange-like back stop 18a is attached rigidly to the end of the hydraulic piston 11a, the counter piece 19a extending through the central hole in said back stop 18a so that the flange 19a' of the counter piece 19a remains in said cavity space 16a between the bottom 17a of the cavity space and the flange-like back stop 18a. Between the flange 19a' of the counter piece 19a and the flange-like back stop 18a, in the cavity space 16a, a break spring 30a is fitted, which presses the flange 19a' of the counter piece 19a and the back stop 18a apart from each other. In the counter piece 19a, an axial duct 31a is formed, which communicates with the fluid duct 15a placed in the hydraulic piston 11a, through which said fluid duct 15a the pressure fluid is passed to the glide shoe 12a. The counter piece 19a is attached by means of a screw threading 32a to the pressure-fluid supply duct 33a formed into the central axle 2 of the roll so that the counter piece is stationary relative the central axle 2.

When the roll is in operation and the roll mantle 3 revolves, pressure fluid is fed into the hydraulic loading element 10a out of the supply duct 33a, the fluid passes into the duct 31a and from there further along the fluid duct 15a into the glide shoe 12a. The fluid pressure can also act upon the cylinder bore 13a.

The fluid pressure has the effect that the piston 11a rises in the cylinder bore 13a upwards, whereat the glide shoe 12a is supported, by the intermediate of the fluid film, against the inner face 4 of the roll mantle. The spring 30a placed in the cavity space 16a is thereby compressed together. Now, when a situation arises in which the counter-zone element placed facing the loading element proper 10a shown in Fig. 2 is switched on to operation, the pressure is thereat discharged from the duct 33a and from below the hydraulic piston 11a, whereby the spring 30a pulls the glide shoe 12a out of operation.

In Fig. 3, an alternative embodiment of the invention is shown, by means of which the same effect is obtained as by means of the construction shown in Fig. 2. In Fig. 3 the roll axle is denoted with the reference numeral 2, the roll mantle with the reference numeral 3, and the inner face of the mantle with the reference numeral 4. The hydrostatic loading element proper is denoted with the reference numeral 10, and it comprises a hydraulic piston 11 moving in a cylinder bore 13 and, in the usual way, provided with a glide shoe 12. Pressure fluid is fed into the cylinder bore 13 to underneath the hydraulic piston 11 along the feed duct 14. In Fig. 3, the counter-zone element placed facing the hydrostatic loading element 10 proper is denoted generally with the reference denotation 20b. The construction of the counter-zone element 20b is similar to that of the loading element 10 proper, and, thus, the counter-zone element 20b also comprises a hydraulic piston 21b moving in a cylinder bore 23b formed into the roll axle 2, which said hydraulic piston 21b is provided with a glide shoe 22b placed against the inner face 4 of the roll mantle by the intermediate of a fluid film. The counter-zone element 20b is made operative so that pressure fluid is fed out of the feed duct 24b into the cylinder bore 23b to underneath the hydraulic piston 21b. In the construction in accordance with Fig. 3, the hydrostatic loading element 10 proper and the counter-zone element 20b are interconnected by means of a suitable pulling member 6, e.g. a rod or equivalent, and for this purpose, into the roll axle 2, a hole 5 passing through the axle in the transverse direction has been formed, through which said hole the pulling member 6 interconnecting the loading element 10 proper and the counter-zone element 20b passes. The length of the pulling member 6 is fitted such that the loading element 10 proper and the counter-zone element 20b cannot be operative at the same time so that the glide shoes 12 and 22b of both of them were in contact with the inner face 4 of the roll mantle. Thus, in a solution in accordance with Fig. 3, during adjustment of the nip profile of the roll, when a situation is reached in which the counter-zone element 20b must be made operative, the pressure is discharged from underneath the hydraulic piston 11 of the hydrostatic loading element 10 proper and a suitable pressure is fed to underneath the piston 21b of the counter-zone element. Thereby the glide shoe of the counter-zone element 20b is pushed against the inner face 4 of the roll mantle, and the pulling member 6 pulls the glide shoe 12 of the hydrostatic loading element 10 proper out of contact with the inner face 4 of the roll mantle.

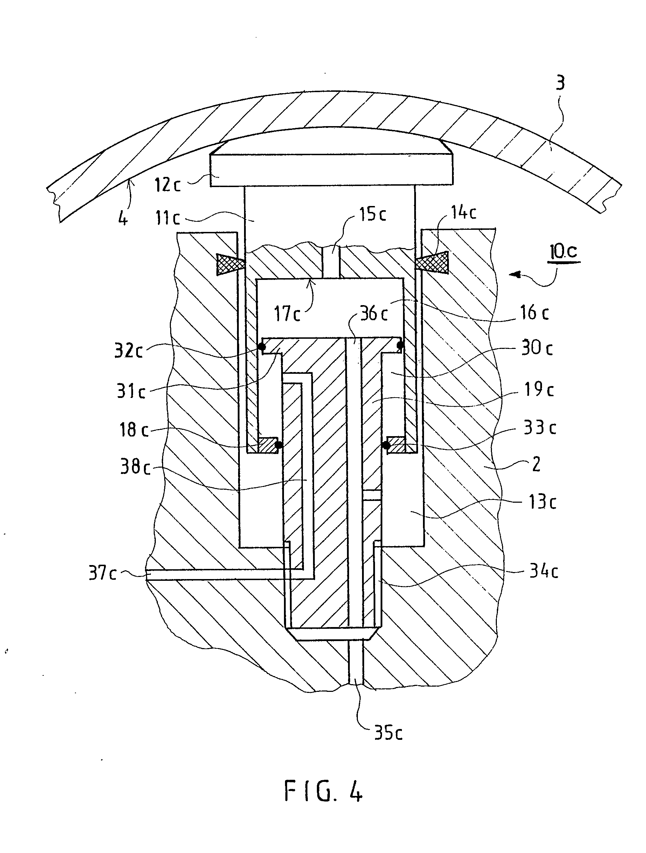

Fig. 4 shows a further alternative embodiment of the device carrying out the method of the invention. In Fig. 4, the axle of the variable-crown roll is denoted with the reference numeral 2, the roll mantle with the reference numeral 3, and the inner face of the mantle with the reference numeral 4. The loading element proper is denoted with the reference denotation 10c, and it comprises a hydraulic piston 11c moving in the cylinder bore 13c formed into the axle 2 of the roll, which said piston 11c is, in the normal way, provided with a glide shoe 12c placed against the inner face 4 of the roll mantle. In the usual way, the piston 11c is also sealed in the cylinder bore 13c by means of an annular seal 14c. In the construction of Fig. 4, a cavity space 16c, which opens towards the bottom of the cylinder bore 13c, has been formed into the hydraulic piston 11c in a way corresponding to the embodiment shown in Fig. 2. In this cavity space 16c, a counter piece 19c is fitted, which is attached to the roll axle 2 rigidly by means of a threaded joint 34c in the way corresponding to Fig. 2. The counter piece 19c is provided with a flange 31c, which is sealed by means of a seal 32c against the wall of the cavity space 16c. To the end of the hydraulic piston 11c, a flange-like back stop 18c is attached rigidly, said back stop being sealed against the counter piece 19c by means of a seal 33c. Thus, the flange 31c of the counter piece and the back stop 18c provided in the hydraulic piston define an annular pressure space 30c between them around the counter piece 19c. Into the counter piece 19c, a through duct 36c has been formed, through which the pressure fluid, fed out of the feed duct 35c provided in the roll axle 2, is passed into the cavity space 16c placed between the flange 31c of the counter piece 19c and the bottom 17c of the cavity space and from said cavity space further along the fluid duct 15c formed into the hydraulic piston 11c to the glide shoe 12c. Also, a second feed duct 37c has been formed into the roll axle 2, and, correspondingly, a second duct 38c has been formed into the counter piece 19c, which said ducts communicate with each other. From one of its ends, the second duct 38c opens into the annular pressure space 30c.

When the loading element 10c shown in Fig. 4 is in operation, the pressure fluid is fed through the feed duct 35c and the duct 36c provided in the counter piece 19c into the cavity space 16c, whereby the hydraulic piston 11c is pushed from the cylinder bore 13c outwards and the glide shoe 12c is pressed against the inner face 4 of the roll mantle. Thereat, when a situation is reached in which, so as to regulate the nip profile of the roll as desired, the counter-zone element placed facing the loading element 10c is made operative, the pressure is discharged from the feed duct 35c and pressure fluid is fed through the second feed duct 37c and the second duct 38c into the annular pressure space 30c, whereby the hydraulic piston 11c is pushed in the cylinder bore 13c inwards and the glide shoe 12c is detached from the contact with the inner face 4 of the roll mantle. Thus, the loading element 10c is not operative at a time when the counter-zone element placed facing said loading element has been made operative.

Above, the invention has been described by way of example with reference to the figures in the accompanying drawing. This is, however, not supposed to restrict the invention to the exemplifying embodiments illustrated in the figures alone, but many modifications are possible within the scope of the inventive idea defined by the accompanying patent claims.

## Claims

1. Method for equalizing the temperature profile of a variable-crown roll and for lowering the operating temperature, which said roll (1) comprises a stationary roll axle (2), around which the roll mantle (3) is arranged as revolving, the deflection of said mantle being adjusted by means of hydraulic loading elements (10,10a,10c) supported on the roll axle (2) and acting upon the inner face (4) of the roll mantle in the direction of compression as well as by means of hydraulic counter-zone elements (20, 20b) acting in the opposite direction, **characterized** in that, when the inner face (4) of the roll mantle is loaded by means of the counter-zone elements (20, 20b), the loading elements (10,10a,10c) proper placed facing said counter-zone elements (20,20b) are pulled off in order that they should not act upon the inner face (4) of the roll mantle.

2. Method as claimed in claim 1, **characterized** in that the loading elements (10a) proper placed facing the counter-zone elements (20) are loaded in the direction contrary to the direction of compression by means of a spring (30a) or equivalent and that, when the counter-zone elements (20) are switched on to operation, the hydraulic working pressure acting upon said loading elements (10a) is discharged so that the loading elements (10a) proper are pulled out of operation by means of the load of the spring (30a) or equivalent.

3. Method as claimed in claim 1, **characterized** in that the counter-zone elements (20b) and the loading elements (10) proper placed facing them are interconnected mechanically by means of a pulling member (6) or equivalent so that, when said counter-zone elements (20b) or the loading elements (10) proper placed facing them are switched on to operation, the pulling member (6) or equivalent pulls said loading elements (10) proper or the counter-zone elements (20b), respectively, out of operation.

4. Method as claimed in claim 1, **characterized** in that a pressure that produces a force of a direction contrary to the direction of compression is switched on to act upon the loading elements (10c) proper placed facing the counter-zone elements (20), and the pressure effective in the direction of compression is released at the same time as the counter-zone elements (20) are switched on to operation.

5. Variable-crown roll intended for carrying out the method as claimed in any of the preceding claims, comprising a stationary roll axle (2), around which the roll mantle (3) is arranged as revolving, hydraulic glide-shoe arrangements that act upon the inner face (4) of the roll mantle (3) and that are supported on the roll axle (2) being arranged between said roll mantle (3) and the roll axle (2), which said glide-shoe arrangements comprise loading elements (10,10a,10c) proper acting in the direction of compression of the nip as well as counter-zone elements (20,20b) acting in the opposite direction, **characterized** in that the counter-zone elements (20,20b) and the loading elements (10,10a,10c) proper placed facing them are interconnected in such a way that, when the counter-zone elements (20,20b) are switched on to operation, the loading elements (10,10a,10c) proper connected to them are arranged to be switched out of operation.

6. Roll as claimed in claim 5, **characterized** in that the loading elements (10a) proper placed facing the counter-zone elements (20) are provided with a constant loading of a direction contrary to the direction of compression by means of a spring (30) or equivalent, and that, when the hydraulic working pressure is switched on to the counter-zone elements (20), said hydraulic working pressure acting upon the loading elements (10a) proper is arranged to be switched off, so that said loading in the opposite direction by means of a spring (30) or equivalent is arranged to pull the loading elements (10a) proper apart from the inner face (4) of the roll mantle.

7. Roll as claimed in claim 5, **characterized** in that the counter-zone elements (20b) and the loading elements (10) proper placed facing them are interconnected mechanically by means of a pulling member (6) or equivalent.

8. Roll as claimed in claim 5, **characterized** in that the counter-zone elements (20) and the loading elements (10c) proper placed facing them are interconnected hydraulically so that, at the same time as the counter-zone elements (20) are switched on to operation, the hydraulic working pressure acting upon said loading elements (10c) proper in the direction of compression is fitted to be switched off, and a hydraulic pressure of opposite direction is fitted to act upon the loading elements (10c) proper so as to pull the loading elements (10c) proper out of operation.

EP 0 328 502 A2

A 1    A 2    A 3    A 4    A 5    A 6    A 7    A 8

T'

T

T'

3

4

10    10    10    10    10    10    10    10

20    20    20    20

2

FIG. 1

1

F I G. 2

F I G. 3

FIG. 4